# EUROPEAN PATENT SPECIFICATION

(11) **EP 1 642 373 B1**
(45) Date of publication and mention of the grant of the patent: **08.05.2019**
(21) Application number: 04757978.4
(22) Date of filing: 22.03.2004
(51) Int. Cl.: H02J 7/00, H01M 2/10

(54) **COMBINATION JUMP STARTER AND HIGH-FREQUENCY CHARGER**
KOMBINIERTES STARTHILFE- UND HOCHFREQUENZLADEGERÄT
COMBINAISON D'AIDE AU DÉMARRAGE ET D'UN CHARGEUR HAUTE FRÉQUENCE

(30) Priority: 21.03.2003 US 456183 P
(43) Date of publication of application: 05.04.2006
(73) Proprietor: Vector Products, Inc., Boca Raton, FL 33432 (US)
(72) Inventor: KRIEGER, Michael, Miami Beach, Florida 33139 (US); Randolph, Bruce, deceased (US)
(74) Representative: Kazi, Ilya
(86) International application number: PCT/US2004/008651
(87) International publication number: WO 2004/086535

(56) References cited:
- EP-A- 1 271 744
- US-A- 4 902 955
- US-A- 5 440 179
- US-A- 5 684 686
- US-A- 5 790 391
- US-A- 5 793 185
- US-A1- 2002 109 952
- US-A1- 2002 121 877
- US-A1- 2003 141 845
- US-B1- 6 377 029

## Description

### BACKGROUND OF THE INVENTION

### Field of the Invention

The present invention relates to a portable, vehicle jump starter/battery charger.

### Related Art

There are a number of portable jump starters for vehicles having a dead starter battery. Such units provide the ability to jump-start a motor when another vehicle's battery is not available to the motorist. US 2002/121877 discloses a portable jumper system. Claim 1 is characterised over this disclosure. Portable jump starters usually have an internal battery which is used to jump start the vehicle.

Additionally, there exist charging devices that can recharge a drained battery. These devices either convert AC power to DC power to charge the battery or contain a battery which is then used to charge the drained battery. It is also known from U. S. Patent No. 5,793,185 to combine a charging device with a jump starter to provide the motorist with several options. However, this patent teaches jumpstarting the vehicle through a set of jumper cables, and charging the dead vehicle battery from a DC output that presumably requires a separate set of cables connected between the DC output and the terminals of the dead battery. This is cumbersome because the separate set of connecting cables can be become separated from the jump starter/charger and therefore may not be readily available when the need to charge arises.

Further, the known devices do not take advantage of their internal battery in addressing other possible needs of a motorist.

Therefore, there is a need for a portable jump starter/charging device that is easy to use and that also supplies additional functionality.

### SUMMARY OF THE INVENTION

In accordance with the present invention, there is provided a portable jump starter/charger apparatus as claimed in claim 1.

Advantageous embodiments are defined by the appended claims.

Further features and advantages of the invention, as well as the structure and operation of various embodiments of the invention, are described in detail below with reference to the accompanying drawings.

### BRIEF DESCRIPTION OF THE DRAWINGS

FIG. 1 illustrates a front side view of a jump starter/charger according to an exemplary embodiment of the invention;
FIG. 2 illustrates a rear side view of a jump starter/charger according to an exemplary embodiment of the invention; and
FIG. 3 is block circuit diagram illustrating the an exemplary embodiment of the invention

### DETAILED DESCRIPTION OF THE INVENTION

The invention is discussed in detail below wherein like reference numbers generally indicate identical, functionally similar, and/or structurally similar elements. While specific exemplary embodiments are discussed, it should be understood that this is done for illustration purposes only. A person skilled in the relevant art will recognize that other components and configurations can be used without departing from the scope of the invention, which is defined by the appended claims.

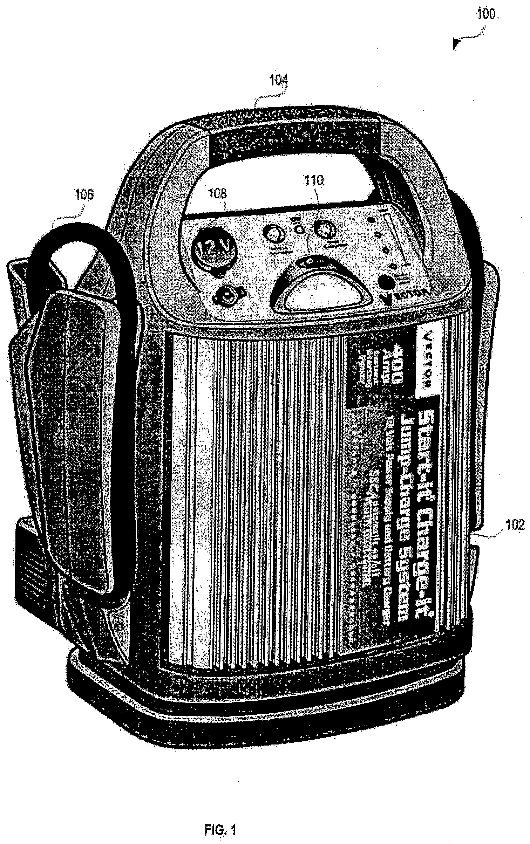

FIG. 1 illustrates a front side view of a jump starter/charger 100 according to an exemplary embodiment of the invention. The jump starter/charger has an external housing 102 with a handle 104. A jump starting circuit including a battery for a jump starting operation is provided in the housing. A charging circuit for a charging operation is also provided in the housing. The jump starter/charger also has two conventional jumper cables, including a positive jumper cable 106 and a negative jumper cable (not visible) in FIG. 1. The positive and negative cables are selectively coupled to the jump starting circuit and the charging circuit. A function selector switch 110 may be provided for selecting either a jump starting mode or a charging mode of the jump starter/charger, as is discussed in more detail below. The function selector switch may be a manually operated or automatically operated. The jump starter/charger 100 may further include a 12 volt DC output socket 108. DC output socket 108 may be configured to receive a cigarette plug adapter.

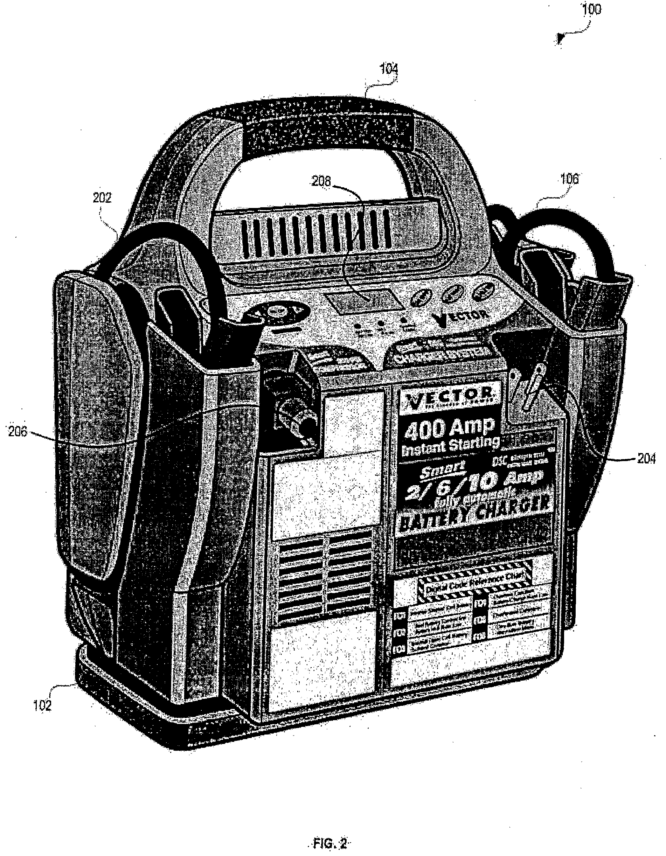

FIG. 2 illustrates a rear side view of a jump starter/charger 100 according to an exemplary embodiment of the invention. The negative jumper cable 202 is stored on an opposite side from the positive jumper cable 106. The jump starter/charger 100 also has an AC input plug 204 adapted for connection to an external AC source for supplying power to the jump starter/charger. In addition, an air compressor 206, which can be used for inflating tires, for example, may be contained within the same housing. The housing may also includes a display 208 that can indicate the state of the apparatus and of the jumpstarting and charging operation, including error codes generated by diagnostics as discussed below.

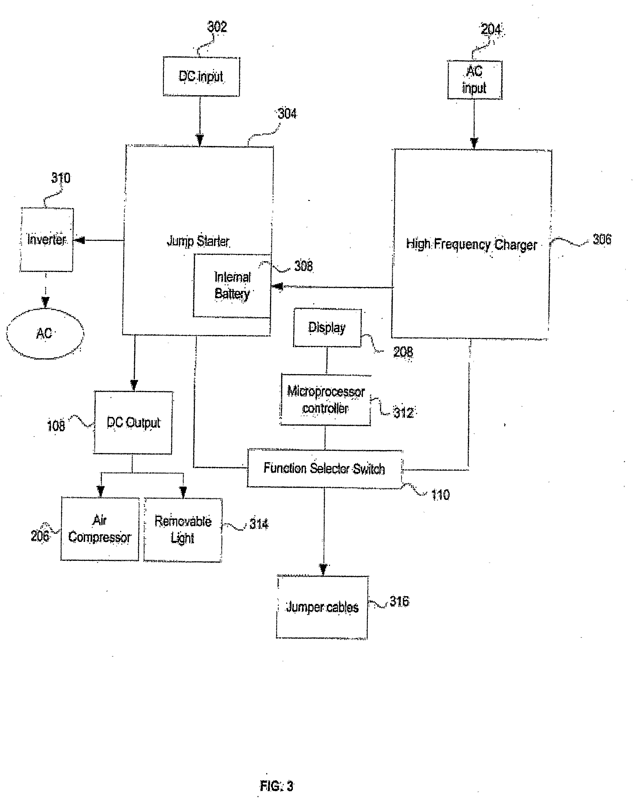

FIG. 3 is a block circuit diagram of an exemplary embodiment of the system of the present invention. The AC input 204 may be coupled to the charging circuit, which may be a high frequency charger 306. An example of a high-frequency charger that may be used to implement the present invention is described in U.S. Patent Application No. 10/270,391, entitled "A High Frequency Battery Charger and Method of Operating Same," commonly owned by the Assignee of the present application and now granted as U.S. 6822425.

In addition to the AC input plug 204, the apparatus may also have a DC input 302. The DC input 302 is coupled to the jump starter circuit 304, and can charge the internal battery 308 of the jump starter circuit 304 directly. The internal battery 308 can also be charged by the high frequency charger 306. A microprocessor, described below, may be used to control the charging process.

An example of a jump starter that may be used to implement the present invention is described in U.S. Patent Application No. 10/315,061 entitled "Microprocessor Controlled Jump Starter System With Polarity Protection," commonly owned by the Assignee of the present application and now granted as U.S.7345450. The jump starter circuit of the present invention may include a polarity protection circuit (not shown) that can be electrically coupled to the depleted battery and to the internal battery 308. The polarity protection circuit can prevent current flow between the batteries unless a proper polarity connection is achieved, i. e. the positive terminal of the internal battery is connected to the positive terminal of the depleted battery and the negative terminal of the internal battery is connected to the negative terminal of the depleted battery. The above-mentioned U. S. Patent Application No. 10/315,061 describes a polarity protection circuit that may be used to implement this aspect of the described embodiment.

Both the jump starter 304 and the high frequency charger 306 have their own internal diagnostics (not shown, but described and illustrated in the above mentioned applications) that check, for example, the status of the internal and/or depleted battery and whether the jumper cables are correctly attached to the external battery. The diagnostics can generate error codes which the microprocessor 312 can display on display 208 to notify the user of an error.

Both the jump starter 304 and the high frequency charger 306 are coupled to the function selector switch 110. The function selector switch 110 may be either a manually operated or an automatically operated. The function selector switch 110 that is automatically operated may be controlled by the microprocessor controller 312 or other suitable controller. The function selector switch 110 is used to selectively connect the jumper cables to the output of the jump starter 304 and the output of the high frequency charger 306. Thus, both the jump starter 304 and the high frequency charger 306 use the same set of jumper cables 316.

In another arrangement, the jump starter/charger 100 may automatically determine whether to operate the jump starter 304 or the high frequency charger 306. For example, the high frequency charger 306 may be configured to operate only when there is AC power supplied to the charger via AC input 204. If no AC power is input to the charger, the jump starter 304 is operated. The function selector switch 110 is then operated accordingly. Alternately, the microprocessor or other circuitry determine when AC power is present and control the jump starter and high frequency charger accordingly. In any case, the same set of jumper cables 316 are used to provide power from both of the jump starter 304 and the high frequency charger 306.

To provide an AC output, the internal battery 308 of jump starter 304 may be connected to an inverter for converting the DC battery current to an AC current. DC to AC inverters are well known to those of ordinary skill in the art.

The DC output 108 can be used to provide power to the built in air compressor 206, a removable light 314 or any other type of accessory.

This combination of the functionalities of a jump starter and a charger provides a motorist with the ability, not only to jump-start a vehicle with a dead battery, but also to charge the battery with the same cables used for jump-starting. No additional cables or other DC accessories are required. The motorist can further inflate a tire, and illuminate an area with the removable light. The jump starter/charger of the present invention also allows the motorist to use AC appliances anywhere.

While various embodiments of the present invention have been described above, it should be understood that they have been presented by way of example only, and not limitation. Thus, the breadth and scope of the present invention should not be limited by any of the above-described exemplary embodiments, but should instead be defined only in accordance with the following claims and their equivalents.

## Claims

1. A portable jump starter and charger apparatus (100), comprising:
a housing (102);
an AC input (204) disposed on the housing;
a jump-starter battery (304, 308) enclosed within said housing and providing a first DC output;
a high frequency charger (306) enclosed within said housing for receiving AC current via the AC input (204) and having an output for providing a second DC output from the AC current; and
a pair of battery cables (316);
the apparatus further comprises a function selector switch (110) having a first input coupled to the first DC output of the jump-starter battery (304, 308), a second input coupled to the second DC output at the output of the high frequency charger (306), and an output coupled to the battery cables (316), **characterized in that** the function selector switch (110) being operative to selectively couple one of the first and second inputs to the output of the function selector switch for either jump-starting a vehicle with the first DC output from the jump-starter battery (304, 308) through the pair of battery cables or charging the battery of the vehicle with the second DC output present at the output of the high frequency charger (306) through the pair of battery cables (316).

2. The apparatus (100) of claim 1, further comprising a removable light (314) mountable on the housing (102) to be coupled to the jump starter battery (304, 308).

3. The apparatus (100) of claim 1, further comprising a DC outlet (108) disposed in the housing (102) to be accessible from outside of the housing, coupled to said jump starter battery (304, 308), and operative to provide DC power.

4. The apparatus (100) of claim 1, further comprising a DC input (302) for receiving DC power and being coupled to said jump-starter battery (304, 308).

5. The apparatus of claim 1, further comprising an air compressor (206) attached to the housing (102), the air compressor coupled to said jump starter battery(304, 308) to receive said first DC output.

6. The apparatus (100) of claim 1, further comprising:
a DC to AC inverter (310) coupled to said jump-starter battery(304, 308);
an AC outlet coupled to said DC to AC inverter; and wherein said function selector switch (110) is a three-way switch operative to switch to provide AC power at said AC outlet.

7. The apparatus (100) of claim 1, wherein said high frequency charger (306) is coupled to said jump starter battery(304, 308) to provide a charging current to charge said jump-starter battery.

8. The apparatus (100) of any preceding claim, wherein the function selector switch (110) is manually operated.

9. The apparatus (100) of any one of claims 1 to 7, wherein the function selector switch (110) is automatically operated.

## Patentansprüche

1. Tragbare Starthilfe- und Ladegerätvorrichtung (100), die Folgendes aufweist:
ein Gehäuse (102);
einen am Gehäuse angeordneten Wechselstromeingang (204) ;
eine Starthilfebatterie (304, 308), die in dem genannten Gehäuse eingeschlossen ist und einen ersten Gleichstromausgang bereitstellt;
ein Hochfrequenzladegerät (306), das in dem genannten Gehäuse eingeschlossen ist zur Aufnahme von Wechselstrom über den Wechselstromeingang (204) und das einen Ausgang zum Bereitstellen eines zweiten Gleichstromausgangs von dem Wechselstrom hat; und
ein Paar Batteriekabel (316);
wobei die Vorrichtung ferner einen Funktionswahlschalter (110), der einen ersten, mit dem ersten Gleichstromausgang der Starthilfebatterie (304, 308) gekoppelten Eingang, einen zweiten, mit dem zweiten Gleichstromausgang am Ausgang des Hochfrequenzladegeräts (306) gekoppelten Eingang und einen mit den Batteriekabeln (316) gekoppelten Ausgang aufweist, **dadurch gekennzeichnet, dass** der Funktionswahlschalter (110) zum wahlweisen Koppeln des ersten oder des zweiten Eingangs mit dem Ausgang des Funktionswahlschalters entweder zum Starten eines Fahrzeugs mit dem ersten Gleichstromausgang von der Starthilfebatterie (304, 308) durch das Paar Batteriekabel oder zum Laden der Batterie des Fahrzeugs mit dem zweiten Gleichstromausgang, der sich am Ausgang des Hochfrequenzladegeräts (306) befindet, durch das Paar Batteriekabel (316) funktionell ist.

2. Vorrichtung (100) nach Anspruch 1, die ferner eine abnehmbare Leuchte (314) aufweist, die an dem Gehäuse (102) angebracht werden kann, um mit der Starthilfebatterie (304, 308) gekoppelt zu werden.

3. Vorrichtung (100) nach Anspruch 1, die ferner eine Gleichstrombuchse (108) aufweist, die im Gehäuse (102) angeordnet ist, so dass sie von außerhalb des Gehäuses zugänglich ist, mit der genannten Starthilfebatterie (304, 308) gekoppelt ist und zum Bereitstellen von Gleichstrom funktionell ist.

4. Vorrichtung (100) nach Anspruch 1, die ferner einen Gleichstromeingang (302) zum Aufnehmen von Gleichstrom aufweist, der mit der genannten Starthilfebatterie (304, 308) gekoppelt ist.

5. Vorrichtung nach Anspruch 1, die ferner einen Drucklufterzeuger (206) aufweist, der am Gehäuse (102) angebracht ist, wobei der Drucklufterzeuger zum Aufnehmen des genannten ersten Gleichstromausgangs mit der genannten Starthilfebatterie (304, 308) gekoppelt ist.

6. Vorrichtung (100) nach Anspruch 1, die ferner Folgendes aufweist:
einen Wechselrichter zur Umwandlung von Gleichstrom in Wechselstrom (310), der mit der genannten Starthilfebatterie (304, 308) gekoppelt ist;
eine Wechselstrombuchse, die mit dem genannten Wechselrichter zur Umwandlung von Gleichstrom in Wechselstrom gekoppelt ist;
und wobei der genannte Funktionswahlschalter (110) ein Dreiwegeschalter ist, der zum Bereitstellen von Wechselstrom an der genannten Wechselstrombuchse funktionell ist.

7. Vorrichtung (100) nach Anspruch 1, wobei das genannte Hochfrequenzladegerät (306) mit der genannten Starthilfebatterie (304, 308) gekoppelt wird, um einen Ladestrom zum Laden der genannten Starthilfebatterie bereitzustellen.

8. Vorrichtung (100) nach einem der vorhergehenden Ansprüche, wobei der Funktionswahlschalter (110) von Hand betätigt wird.

9. Vorrichtung (100) nach einem der Ansprüche 1 bis 7, wobei der Funktionswahlschalter (110) automatisch betätigt wird.

## Revendications

1. Appareil portable de démarrage de secours et chargeur (100), comprenant :
un logement (102) ;
une entrée CA (204) disposée sur le logement ;
une batterie de démarrage de secours (304, 308) abritée au sein dudit logement et fournissant une première sortie CC ;
un chargeur à haute fréquence (306) abrité au sein dudit logement pour recevoir un courant CA via l'entrée CA (204) et ayant une sortie pour fournir une deuxième sortie CC à partir du courant CA ; et
une paire de câbles de batterie (316) ;
l'appareil comprend en outre un commutateur sélecteur de fonction (110) ayant une première entrée qui est couplée à la première sortie CC de la batterie de démarrage de secours (304, 308), une deuxième entrée couplée à la deuxième sortie CC au niveau de la sortie du chargeur à haute fréquence (306), et une sortie couplée aux câbles de batterie (316), **caractérisé en ce que** le commutateur sélecteur de fonction (110) est opérationnel pour coupler sélectivement l'une des première et deuxième entrées à la sortie du commutateur sélecteur de fonction pour soit effectuer un démarrage de secours sur un véhicule avec la première sortie CC à partir de la batterie de démarrage de secours (304, 308) par l'intermédiaire de la paire de câbles de batterie, soit charger la batterie du véhicule avec la deuxième sortie CC présente au niveau de la sortie du chargeur à haute fréquence (306) par l'intermédiaire de la paire de câbles de batterie (316).

2. Appareil (100) de la revendication 1, comprenant en outre une lumière amovible (314) apte à être montée sur le logement (102) destinée à être couplée à la batterie de démarrage de secours (304, 308).

3. Appareil (100) de la revendication 1, comprenant en outre une prise CC (108) disposée dans le logement (102) destinée à être accessible à partir de l'extérieur du logement, couplée à ladite batterie de démarrage de secours (304, 308), et opérationnelle pour fournir de l'énergie CC.

4. Appareil (100) de la revendication 1, comprenant en outre une entrée CC (302) pour recevoir de l'énergie CC et étant couplée à ladite batterie de démarrage de secours (304, 308).

5. Appareil de la revendication 1, comprenant en outre un compresseur d'air (206) attaché au logement (102), le compresseur d'air étant couplé à ladite batterie de démarrage de secours (304, 308) pour recevoir ladite première sortie CC.

6. Appareil (100) de la revendication 1, comprenant en outre:
un onduleur CC / CA (310) couplé à ladite batterie de démarrage de secours (304, 308) ;
une prise CA couplée audit onduleur CC / CA ;
et dans lequel ledit commutateur sélecteur de fonction (110) est un commutateur à trois voies qui opère pour commuter afin de fournir de l'énergie CA au niveau de ladite prise CA.

7. Appareil (100) de la revendication 1, dans lequel ledit chargeur à haute fréquence (306) est couplé à ladite batterie de démarrage de secours (304, 308) afin de fournir un courant de charge pour charger ladite batterie de démarrage de secours.

8. Appareil (100) d'une quelconque revendication précédente, dans lequel le commutateur sélecteur de fonction (110) est opéré manuellement.

9. Appareil (100) de l'une quelconque des revendications 1 à 7, dans lequel le commutateur sélecteur de fonction (110) est opéré automatiquement.
